# FASCICULE DE BREVET EUROPEEN

(11) **EP 1 145 953 B1**
(45) Date de publication et mention de la délivrance du brevet: **17.12.2003**
(21) Numéro de dépôt: 01400624.1
(22) Date de dépôt: 09.03.2001
(51) Int. Cl.: B64C 7/02, B64D 27/18

(54) **Mât de suspension profilé de voilure d'aéronef**
Profilierte Triebwerksgondelaufhängung für Flugzeugflügel
Airfoiled engine pylon for aircraft wing

(30) Priorité: 10.04.2000 FR 0004561
(43) Date de publication de la demande: 17.10.2001
(73) Titulaire: AIRBUS FRANCE, 31060 Toulouse (FR)
(72) Inventeur: Cambon, Jean-Louis, 31880 La Salvetat Saint-Gilles (FR)
(74) Mandataire: Bonnetat, Christian

(56) Documents cités:
- EP-A- 0 432 972
- US-A- 4 067 518
- US-A- 4 712 750
- US-A- 4 867 394

## Description

La présente invention concerne un mât de suspension profilé de voilure d'aéronef.

On sait que certains aéronefs comportent des mâts profilés, suspendus à leur voilure et faisant saillie par rapport à l'intrados de cette dernière. De tels mâts sont destinés à la suspension, sous la voilure, de dispositifs tels que moteurs, armes, réservoirs de carburant, etc ...

Bien entendu, ces mâts et les dispositifs qui y sont suspendus engendrent des perturbations dans l'écoulement aérodynamique sur la voilure, ce qui se traduit, localement, par une perte de portance et un accroissement de traînée. Ces effets aérodynamiques défavorables sont par ailleurs renforcés, du fait que, pour des raisons structurelles notamment, lesdits mâts, d'une part, présentent une largeur relativement importante et, d'autre part, ont leur bord de fuite au voisinage du bord de fuite de la voilure, un tel voisinage de bords de fuite augmentant les risques de décollement des filets d'air.

Pour remédier à ces inconvénients, on utilise déjà depuis 1986, sur l'avion Airbus A320, un carénage de réduction de perte locale de sustentation aérodynamique due à un tel mât de suspension. Un carénage du même type --qui est par exemple décrit dans le document EP-A-0 432 972-- est disposé au contact de l'intrados de ladite voilure et s'étend, d'une part, en hauteur, sur une partie dudit mât et, d'autre part, vers l'arrière de la voilure, en se prolongeant au-delà du bord de fuite de cette dernière. Un tel carénage connu présente la forme approximative d'un parallélépipède droit terminé à l'arrière par une pyramide à pointe arrondie. La surface supérieure du carénage, saillant au-delà du bord de fuite de la voilure, prolonge l'extrados de celle-ci et la largeur dudit carénage correspond à la largeur maximale dudit mât, de sorte que les faces latérales dudit carénage prolongent vers l'arrière la section de largeur maximale dudit mât.

Pour un avion de taille moyenne, ce carénage connu présente des dimensions acceptables. En revanche, pour un avion de grande taille, il est obligatoirement long et volumineux, ce qui engendre de fortes charges aérodynamiques s'exerçant en vol sur ledit carénage. Ceci implique de le rigidifier de sorte qu'il en résulte une augmentation de masse pénalisante.

Par ailleurs, lorsque la voilure comporte des éléments mobiles de bord de fuite, tels que des volets de courbure, ce carénage doit lui-même être mobile. Dans ce cas, pour certaines configurations de vol, le carénage peut se trouver au moins en partie dans le flux d'air chaud d'un moteur --dont la température peut atteindre 700°C-- de sorte qu'il doit alors être réalisé dans des matériaux résistant à la chaleur et dimensionné pour résister à ces températures élevées et à la fatigue acoustique. Il en résulte donc des contraintes de masse et des coûts supplémentaires de réalisation.

L'objet de la présente invention est de remédier à ces inconvénients.

A cette fin, selon l'invention, le mât de suspension de voilure d'aéronef, ladite voilure comportant un intrados dont la partie arrière est concave et en retrait par rapport à sa partie avant et ledit mât :
- étant suspendu à ladite voilure en faisant saillie par rapport audit intrados de la voilure et étant profilé pour comporter, entre son bord d'attaque et son bord de fuite, une section de largeur maximale ; et
- étant pourvu d'un carénage de réduction de perte locale de sustentation aérodynamique, qui :
   . est disposé au contact de l'intrados de ladite voilure et s'étend en hauteur sur une partie dudit mât ; et
   . s'étend vers l'arrière de la voilure et se prolonge, au-delà du bord de fuite de celle-ci, par une partie arrière saillante ayant une surface supérieure en prolongement aérodynamique de l'extrados de ladite voilure,
est remarquable :
- en ce que ladite section de largeur maximale dudit mât est disposée à l'avant de ladite partie arrière, concave et en retrait, de l'intrados de la voilure ; et
- en ce que ledit carénage de réduction de perte locale de sustentation aérodynamique :
   . est logé, au moins pour la plus grande part de sa hauteur, dans la concavité de ladite partie arrière de l'intrados de la voilure,
   . s'étend vers l'arrière de la voilure en s'évasant latéralement, à la manière d'un éventail, depuis ledit mât de suspension, où il présente une largeur au moins approximativement égale à ladite largeur maximale de celui-ci jusqu'au bord de fuite de la voilure, où il présente une largeur au moins égale à deux fois ladite largeur maximale, et
   . comporte une face inférieure qui se rapproche de ladite surface supérieure en prolongement aérodynamique de l'extrados de la voilure pour donner, à ladite partie arrière saillante dudit carénage, la forme d'une lame s'amincissant vers l'arrière et terminée par un bord de fuite aérodynamique, qui est en saillie par rapport au bord de fuite de la voilure et qui s'étend le long de celui-ci sur une longueur correspondant à ladite largeur dudit carénage à l'emplacement dudit bord de fuite de la voilure.

Ainsi, grâce à la présente invention, on obtient un carénage plat, de faibles dimensions en hauteur, mais de forme étalée sur le bord de fuite de la voilure, qui permet de résoudre les problèmes du carénage connu, mentionnés ci-dessus. Une telle forme plate et étalée permet, non seulement d'éliminer les problèmes de voisinage des bords de fuite de la voilure et du mât de suspension, mais encore de modifier fortement la circulation locale de l'air en favorisant la répartition de vitesse au bord de fuite de la voilure. Le gain de portance obtenu par le carénage conforme à la présente invention est nettement supérieur à celui du carénage connu. De plus, ce gain de portance est plus étalé en envergure, du fait de la forme spécifique étalée du carénage de l'invention.

On remarquera que, afin d'annuler ou à tout le moins de minimiser la perte de portance due à la présence du mât de suspension et à l'installation, par exemple motrice, qu'il porte, on pourrait être tenté de donner audit carénage une largeur --au niveau du bord de fuite de la voilure-- couvrant en envergure la totalité de la zone de perte de portance. Cependant, dans ce cas, cette largeur pourrait être égale à de nombreuses fois la largeur maximale du mât, ce qui imposerait audit carénage des dimensions, et donc une masse, importantes. Aussi, en pratique, la largeur du carénage au niveau du bord de fuite de la voilure résulte d'un compromis entre le gain de portance procuré par ledit carénage de l'invention et la masse correspondante de ce dernier.

On remarquera de plus que la forme effilée du bord de fuite aérodynamique dudit carénage permet de réduire considérablement la longueur de la partie saillante du carénage connu au-delà du bord de fuite de la voilure pour une efficacité aérodynamique du même ordre. L'expérience a montré que la présente invention permet de réduire d'environ 80% la hauteur du carénage et d'environ 50% la longueur de ladite partie saillante de celui-ci par rapport à ce carénage connu, à efficacité aérodynamique sensiblement égale vis-à-vis des risques de décollements des filets d'air au bord de fuite du mât et des problèmes de perte de portance. Une telle réduction des dimensions permet donc d'éviter les inconvénients de masse et d'encombrement mentionnés ci-dessus et, dans le cas d'un carénage mobile proche du flux chaud d'un moteur, de réduire les contraintes de dimensionnement et de nature des matériaux à utiliser.

Avantageusement, le bord de fuite de ladite partie arrière saillante comporte une partie intermédiaire et deux parties latérales, ladite partie intermédiaire se trouvant en prolongement aérodynamique de ladite section de largeur maximale dudit mât et étant plus en saillie, par rapport au bord de fuite de la voilure, que lesdites parties latérales.

Ainsi, c'est cette partie intermédiaire se trouvant en prolongement du mât de suspension, qui est la plus saillante par rapport au bord de fuite de la voilure pour pouvoir limiter au maximum les problèmes de décollement de filets d'air et de perte de portance dus à la présence dudit mât de suspension. Quant à elles, les parties latérales du bord de fuite du carénage permettent d'augmenter le gain en portance, par extension locale de la corde de la voilure, sur une envergure limitée.

A leur extrémité opposée à ladite partie intermédiaire, lesdites parties latérales du bord de fuite de la partie arrière saillante peuvent rejoindre progressivement le bord de fuite de la voilure et ladite partie intermédiaire du bord de fuite de la partie arrière saillante peut être arrondie et convexe, tandis que lesdites parties latérales du bord de fuite de la partie arrière saillante peuvent comporter une portion concave au raccord de ladite partie intermédiaire.

Pour augmenter l'efficacité du carénage conforme à la présente invention, on a trouvé qu'il était avantageux que :
- ladite face inférieure dudit carénage comporte une nervure intermédiaire et deux flancs latéraux ;
- ladite nervure intermédiaire se trouve en prolongement aérodynamique de ladite section de largeur maximale dudit mât, se termine à l'arrière par ladite partie intermédiaire de bord de fuite et soit plus en relief, par rapport à ladite partie arrière de l'intrados de la voilure, que lesdits flancs latéraux ; et
- lesdits flancs latéraux relient progressivement ladite nervure intermédiaire à ladite partie arrière dudit intrados de la voilure en formant latéralement ledit éventail et se terminent à l'arrière par lesdites parties latérales de bord de fuite de ladite partie arrière saillante.

Le carénage selon l'invention peut être symétrique ou dissymétrique par rapport à l'axe longitudinal du pied dudit mât de suspension.

Quel que soit le mode de réalisation du bord de fuite du carénage, il va de soi qu'il faut veiller à ce que la forme de la partie arrière saillante de ce dernier n'entraîne pas des décollements des filets d'air, ce qui augmenterait la traînée.

Par ailleurs, afin d'éviter que la partie arrière saillante du carénage conforme à la présente invention soit noyée dans les effets visqueux de la couche limite au voisinage du bord de fuite de la voilure --ce qui réduirait notablement l'efficacité aérodynamique dudit carénage--, il est important que, audit bord de fuite de la voilure, l'épaisseur dudit carénage soit supérieure à l'épaisseur de la couche limite de l'écoulement aérodynamique sur ladite voilure.

Les figures du dessin annexé feront bien comprendre comment l'invention peut être réalisée. Sur ces figures, des références identiques désignent des éléments semblables.

Les figures 1 et 2 montrent respectivement, en vues de dessus et de dessous, un exemple schématique de mât de suspension conforme à la présente invention, destiné à supporter un moteur sous la voilure d'un avion.

La figure 3 représente, en vue de côté partielle agrandie, la voilure dudit avion et la partie supérieure du mât de suspension des figures 1 et 2.

Les figures 4 à 9 sont des vues en section, correspondant respectivement aux lignes de coupe IV-IV à IX-IX des figures 1 et 3.

La figure 10 est une vue partielle, en perspective de l'arrière et du dessous, du mode de réalisation du mât de suspension illustré par les figures 1 à 9.

Les figures 11 et 12 sont des diagrammes illustrant l'action aérodynamique du carénage conforme à la présente invention.

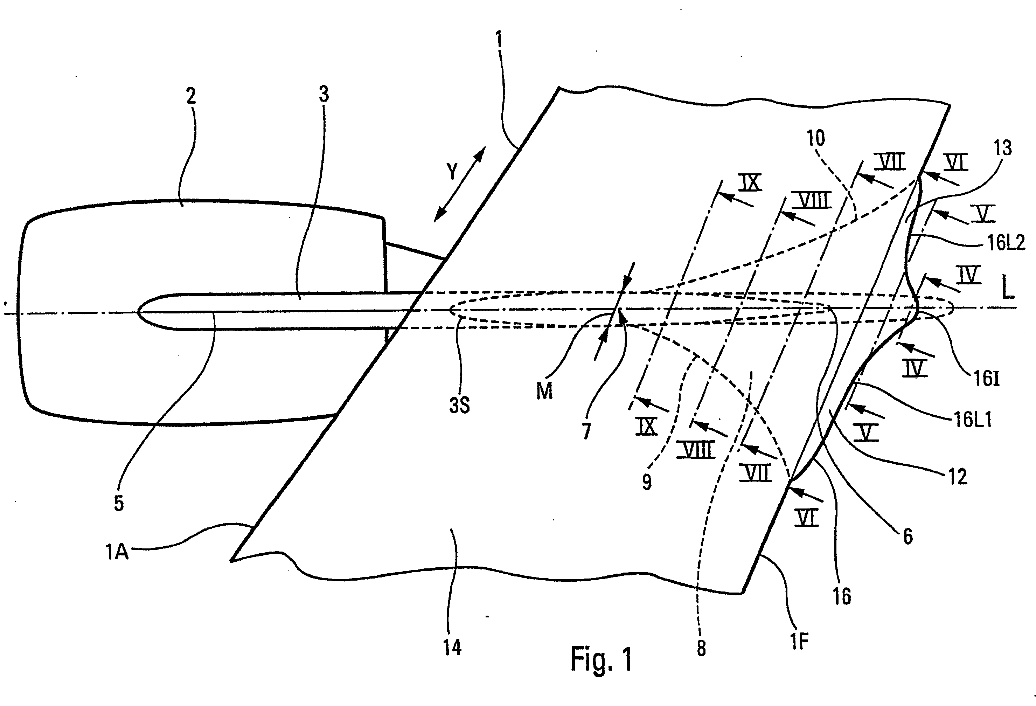

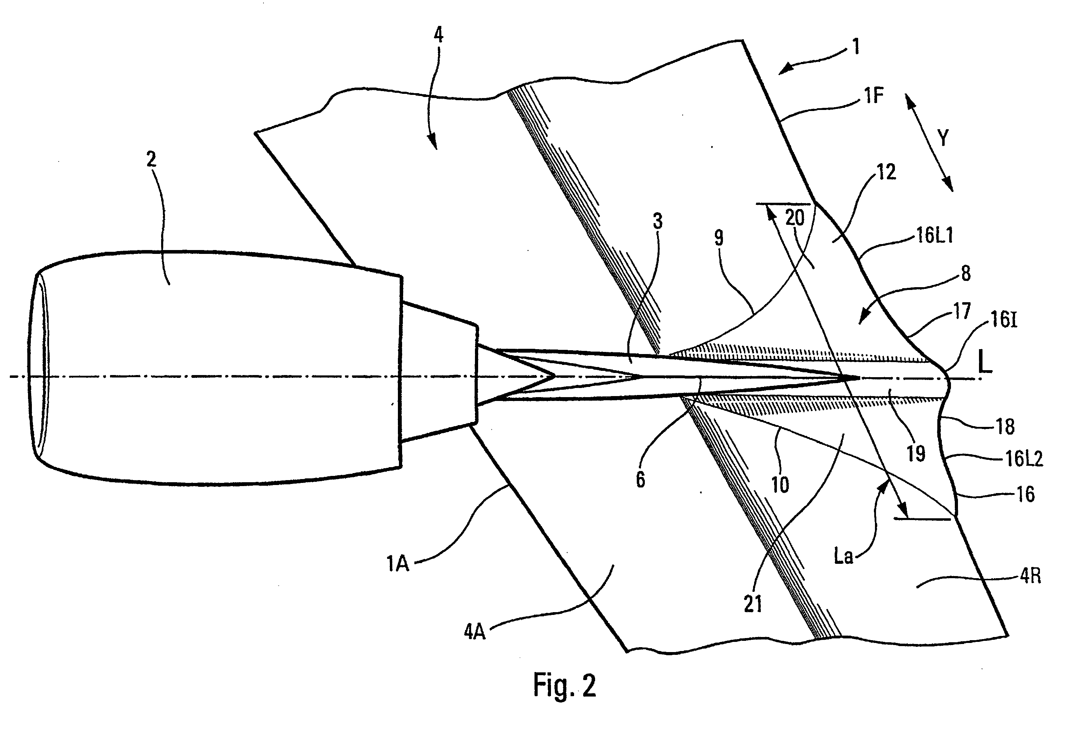

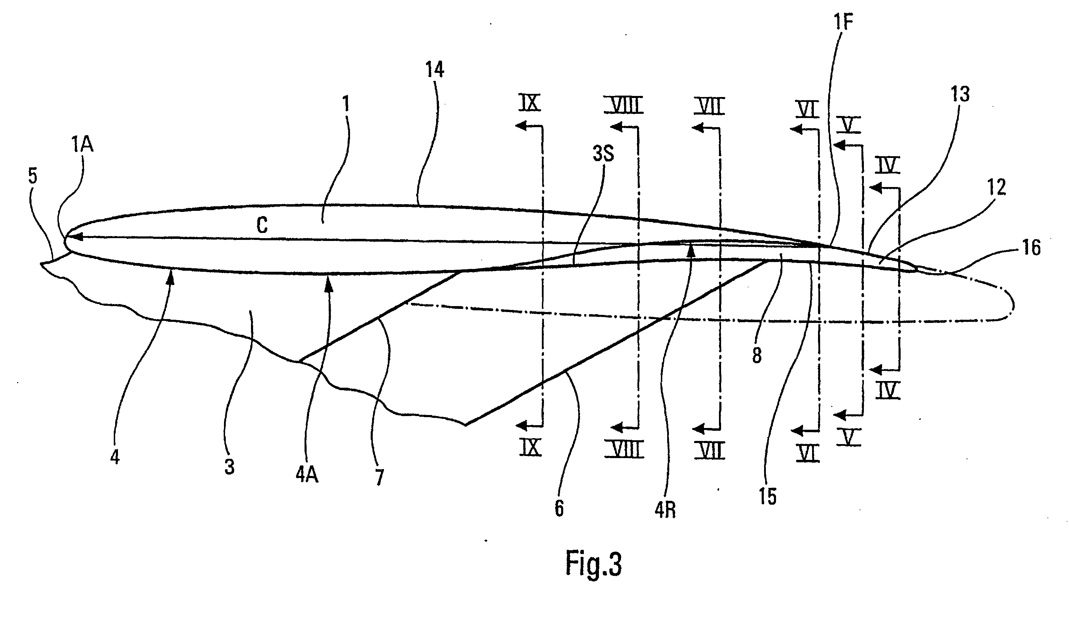

Sur les figures 1 et 2, on a représenté une portion de la voilure 1 d'un avion, au voisinage d'un moteur 2 de ce dernier. Ce moteur 2 est suspendu à la voilure 1 par l'intermédiaire d'un mât de suspension 3, qui fait saillie par rapport à l'intrados 4 de la voilure 1, à laquelle il est relié par le pied de mât 3S, d'axe longitudinal L-L. Comme on peut le voir sur la figure 3, la voilure 1 comporte une partie avant (du côté du bord d'attaque 1A) épaisse et une partie arrière (du côté du bord de fuite 1F) mince du fait que l'intrados 4 comporte une partie arrière 4R concave et en retrait par rapport à sa partie avant 4A.

Le mât de suspension 3, lui-même suspendu à la voilure 1 de manière connue et non représentée, est profilé et il comporte un bord d'attaque 5 et un bord de fuite 6 et, entre ceux-ci, une section 7 de largeur maximale M. (La largeur du mât 3 est la dimension de ce dernier qui est au moins sensiblement parallèle à l'envergure Y de la voilure 1, c'est-à-dire orthogonale au plan de la figure 3). Dans l'exemple représenté sur les figures, la section 7 n'est pas verticale, mais fortement inclinée vers l'avant, du haut vers le bas. Par ailleurs, ladite section de largeur maximale 7 du mât 3 est disposée à l'avant de la partie arrière 4R, concave et en retrait, de l'intrados 4 de la voilure 1.

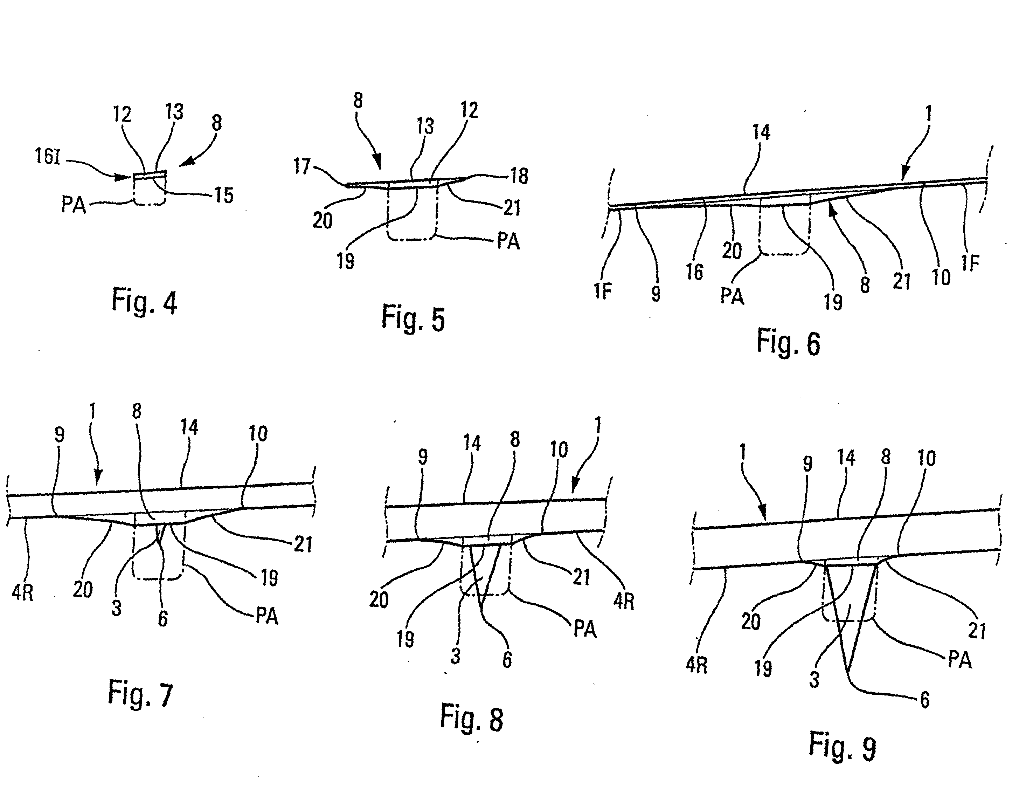

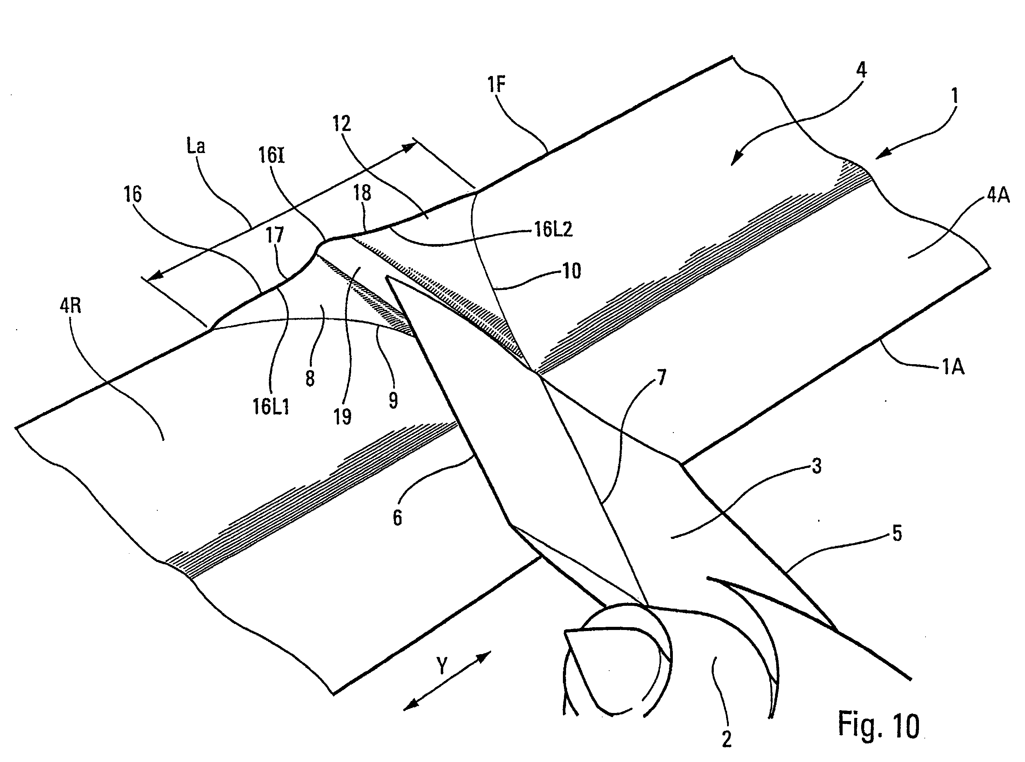

De plus, le mât de suspension 3 est pourvu d'un carénage 8 (voir également les figures 4 à 10), destiné à réduire la perte locale de portance et l'accroissement local de traînée engendrés par le mât 3 et le moteur 2. Ce carénage 8 est plat et est disposé au contact de l'intrados 4 de la voilure 1, en ne s'étendant que sur une faible partie de la hauteur dudit mât 3. Plus précisément, le carénage 8 est logé, au moins pour la plus grande part de sa hauteur, dans la concavité de la partie arrière 4R de l'intrados 4 de la voilure 1.

Le carénage plat 8 s'étend vers l'arrière de la voilure 1 et se prolonge au-delà du bord de fuite 1F de cette dernière, par une partie arrière saillante 12, dont la surface supérieure 13 est en prolongement de l'extrados 14 de la voilure 1. La face inférieure 15 du carénage 8, au moins dans sa partie arrière, se rapproche de la face supérieure 13 pour donner à ladite partie arrière saillante 12 la forme d'une lame s'amincissant vers l'arrière et terminée par un bord de fuite 16, en saillie par rapport au bord de fuite 1F de la voilure 1.

En s'étendant vers l'arrière de la voilure 1, le carénage plat 8 s'évase latéralement, à la manière d'un éventail, depuis le mât de suspension 3, où sa largeur est au moins approximativement égale à la largeur maximale M de la section 7, jusqu'au bord de fuite 1F de la voilure 1 où il présente une largeur La plusieurs fois supérieure à ladite largeur maximale M du mât de suspension 3. Latéralement, ledit carénage plat 8 se raccorde à la partie arrière 4R de l'intrados 4, le long de lignes évasées 9 et 10, partant dudit mât de suspension 3 et aboutissant aux extrémités du bord de fuite 16 de la partie arrière saillante 12. Ainsi, le bord de fuite 16 présente une longueur qui est égale à la largeur La du carénage plat 8, au niveau du bord de fuite 1F de la voilure 1.

Comme on peut le voir sur les figures 1, 2 et 10, le bord de fuite 16 de la partie arrière saillante 12 comporte une partie intermédiaire 16I et deux parties latérales 16L1 et 16L2. La partie intermédiaire 16I se trouve en prolongement aérodynamique de la section 7 de largeur maximale M du mât de suspension 3 et est plus en saillie, par rapport au bord de fuite 1F de la voilure 1, que les parties latérales 16L1 et 16L2.

Dans l'exemple de réalisation montré par les figures, le bord de fuite 16 de la partie arrière saillante 12 présente la forme approximative d'une accolade avec une partie intermédiaire 16I, arrondie et convexe, raccordée progressivement au bord de fuite 1F de la voilure 1 par lesdites parties latérales 16L1 et 16L2, qui présentent une portion concave 17 ou 18 au raccord de la partie intermédiaire 16I.

Comme on le voit mieux sur les sections des figures 5 à 9, la face intérieure 15 du carénage 8 comporte une nervure intermédiaire 19 et deux flancs latéraux 20 et 21, raccordés à la partie arrière 4R de l'intrados 4 par lesdites lignes évasées 9 et 10. Cette nervure intermédiaire 19 se trouve en prolongement aérodynamique de la section 7 de largeur maximale M et se termine à l'arrière par la partie intermédiaire 16I du bord de fuite 16. Par rapport à la partie arrière 4R de l'intrados 4 de la voilure 1, la nervure intermédiaire 19 est plus en relief que lesdits flancs latéraux 20 et 21. Ceux-ci relient progressivement la nervure intermédiaire 19 à la partie arrière 4R de l'intrados 4 en formant latéralement ledit éventail, qui est délimitée par les lignes de raccord évasées 9 et 10. Les flancs latéraux 20 et 21 se terminent à l'arrière par les parties latérales 16L1 et 16L2 du bord de fuite 16 de la partie arrière saillante 12.

Dans l'exemple de réalisation représenté sur les figures, le carénage 8 et son bord de fuite 16 sont dissymétriques par rapport à l'axe longitudinal L-L du pied 3S du mât 3. En réalité, la forme du bord de fuite 16 dépend du cas d'espèce et pourrait tout aussi bien être symétrique par rapport audit axe L-L.

Grâce à la présente invention, on obtient donc un carénage 8 particulièrement plat et peu encombrant en hauteur mais étalé en largeur. Sur les figures 1 et 3, on a représenté en traits mixtes les contours du carénage connu PA, qu'il serait nécessaire de prévoir pour la voilure 1, à efficacité aérodynamique équivalente, vis-à-vis des risques de décollements des filets d'air au bord de fuite du mât et des problèmes de perte de portance.

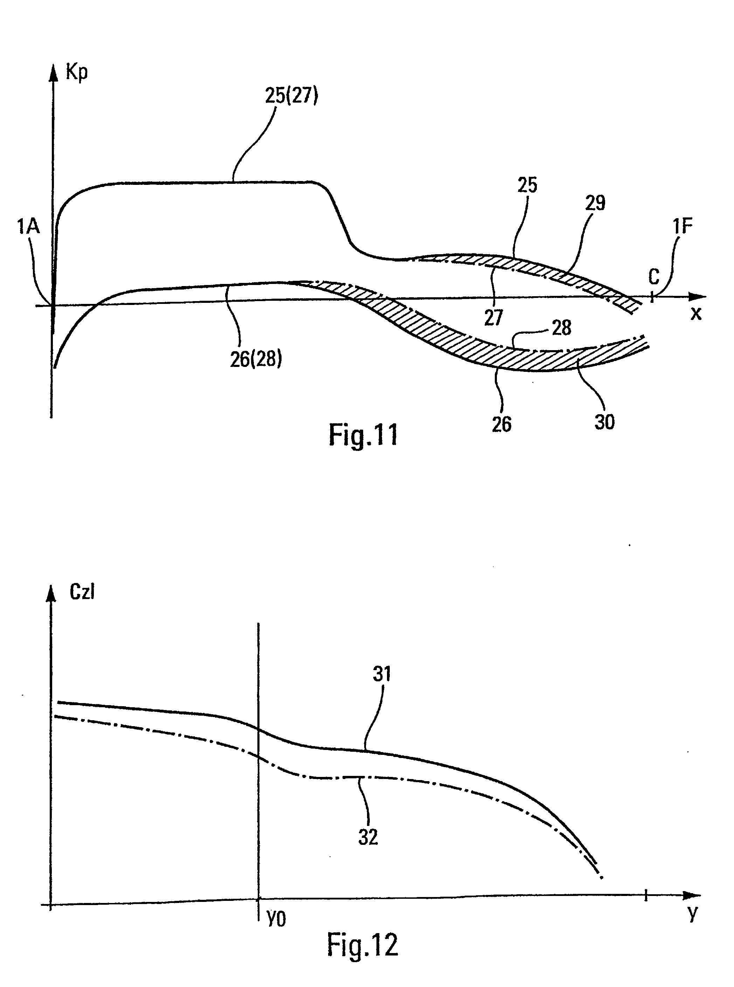

Sur la figure 11, on a représenté, en fonction de la distance x le long de la corde C du profil de la voilure 1, comptée à partir du bord d'attaque 1A en direction du bord de fuite 1F, la courbe 25 de variation du coefficient de pression Kp sur l'extrados 14 et la courbe 26 de variation dudit coefficient Kp sur l'intrados 4, pour l'ensemble moteur 2 - pylône 3 - voilure 1 pourvu du carénage 8 décrit ci-dessus. A titre de comparaison, sur cette figure, on a tracé de plus les mêmes courbes 27 et 28 pour ledit ensemble moteur 2 - pylône 3 - voilure 1, duquel ledit carénage 8 est éliminé. On voit aisément que, grâce au carénage 8 de l'invention, la portance dudit ensemble est augmentée, dans la partie arrière 4R de l'intrados, dans une proportion qui correspond à la somme des zones hachurées 29 et 30 représentées sur la figure 11.

Par ailleurs, sur la figure 12, on a représenté, en fonction de l'envergure Y de la voilure 1, la variation du coefficient de portance local Czl au droit de l'installation motrice sur ladite voilure, la position du moteur 2 et du mât de suspension 3 correspondant à la valeur Yo de ladite envergure Y. La courbe 31 correspond à l'ensemble moteur 2 - pylône 3 - voilure 1 pourvu du carénage 8 décrit ci-dessus, tandis que la courbe 32 correspond au même ensemble moteur 2 - pylône 3 - voilure 1 dont ledit carénage 8 a été supprimé. On peut ainsi apprécier l'importance du gain de portance apporté par le carénage 8 de la présente invention.

## Revendications

1. Mât de suspension (3) de voilure d'aéronef, ladite voilure (1) comportant un intrados (4) dont la partie arrière (4R) est concave et en retrait par rapport à sa partie avant (4A) et ledit mât (3) :
- est adapté à être suspendu à ladite voilure (1) en faisant saillie par rapport audit intrados (4) de la voilure (1) et étant profilé pour comporter, entre son bord d'attaque (5) et son bord de fuite (6), une section (7) de largeur maximale (M) ; et
- étant pourvu d'un carénage (8) de réduction de perte locale de sustentation aérodynamique, qui :
• est disposé au contact de l'intrados (4) de ladite voilure (1) et s'étend en hauteur sur une partie dudit mât (3), et
• s'étend vers l'arrière de la voilure (1) et se prolonge au-delà du bord de fuite (1F) de celle-ci, par une partie arrière saillante (12) ayant une surface supérieure (13) en prolongement aérodynamique de l'extrados (14) de ladite voilure (1),
**caractérisé :**
- **en ce que** ladite section de largeur maximale (7) dudit mât (3) est apte à être disposée à l'avant de ladite partie arrière (4R), concave et en retrait, de l'intrados (4) de la voilure (1) ; et
- **en ce que** ledit carénage de réduction de perte locale de sustentation aérodynamique (8) :
• est apte à être logé, au moins pour la plus grande part de sa hauteur, dans la concavité de ladite partie arrière (4R) de l'intrados (4) de la voilure (1),
• s'étend vers l'arrière de la voilure (1) en s'évasant latéralement, à la manière d'un éventail, depuis ledit mât de suspension (3), où il présente une largeur au moins approximativement égale à ladite largeur maximale (M) de celui-ci jusqu'au bord de fuite (1F) de la voilure (1), où il présente une largeur (La) au moins égale à deux fois ladite largeur maximale (M), et
• comporte une face inférieure (15) qui se rapproche de ladite surface supérieure (13) en prolongement aérodynamique de l'extrados (14) de la voilure (1) pour donner, à ladite partie arrière saillante (12) dudit carénage (8), la forme d'une lame s'amincissant vers l'arrière et terminée par un bord de fuite aérodynamique (16), qui est en saillie par rapport au bord de fuite (1F) de la voilure et qui s'étend le long de celui-ci sur une longueur correspondant à ladite largeur (La) dudit carénage (8) au niveau dudit bord de fuite (1F) de la voilure.

2. Mât de suspension selon la revendication 1,
**caractérisé en ce que** le bord de fuite (16) de la partie arrière saillante (12) comporte une partie intermédiaire (16I) et deux parties latérales (16L1, 16L2), ladite partie intermédiaire se trouvant en prolongement aérodynamique de ladite section de largeur maximale (7) dudit mât (3) et étant plus en saillie, par rapport au bord de fuite (1 F) de la voilure, que lesdites parties latérales (16L1, 16L2).

3. Mât de suspension selon la revendication 2,
**caractérisé en ce que**, à leur extrémité opposée à ladite partie intermédiaire (16I), lesdites parties latérales (16L1, 16L2) du bord de fuite (16) de la partie arrière saillante (12) rejoignent progressivement le bord de fuite (1F) de la voilure

4. Mât de suspension selon l'une des revendications 2 ou 3,
**caractérisé en ce que** ladite partie intermédiaire (16I) du bord de fuite (16) de la partie arrière saillante (12) est arrondie et convexe.

5. Mât de suspension selon l'une des revendications 2 à 4,
**caractérisé en ce que** lesdites parties latérales du bord de fuite (16) de la partie arrière saillante (12) comportent une portion concave (17, 18) au raccord de ladite partie intermédiaire (16I).

6. Mât de suspension selon l'une des revendications 2 à 5,
**caractérisé en ce que** :
- ladite face inférieure (15) dudit carénage (8) comporte une nervure intermédiaire (19) et deux flancs latéraux (20, 21) ;
- ladite nervure intermédiaire (19) se trouve en prolongement aérodynamique de ladite section de largeur maximale (7) dudit mât (3), se termine à l'arrière par ladite partie intermédiaire de bord de fuite (16I) et est plus en relief, par rapport à ladite partie arrière (4R) de l'intrados (4) de la voilure, que lesdits flancs latéraux (20, 21) ; et
- lesdits flancs latéraux (20, 21) relient progressivement ladite nervure intermédiaire (19) à ladite partie arrière (4R) dudit intrados (4) de la voilure en formant latéralement ledit éventail et se terminent à l'arrière par lesdites parties latérales de bord de fuite (16L1, 16L2) de ladite partie arrière saillante (12).

7. Mât de suspension selon l'une des revendications 1 à 6,
**caractérisé en ce que** ledit carénage (8) est symétrique par rapport à l'axe longitudinal (L-L) du pied (3S) dudit mât (3).

8. Mât de suspension selon l'une des revendications 1 à 6,
**caractérisé en ce que** ledit carénage (8) est dissymétrique par rapport à l'axe longitudinal (L-L) du pied (3S) dudit mât (3).

## Patentansprüche

1. Aufhängungsmast (3) für einen Flugzeugflügel, wobei der genannte Flügel (1) eine Unterseite (4) umfasst, deren hinterer Teil (4R) konkav und in Bezug auf seinen vorderen Teil (4A) zurückgesetzt ist, wobei der genannte Mast (3)
- so angepasst ist, dass er am genannten Flügel (1) aufgehängt werden kann, indem er in Bezug auf die Unterseite (4) des Flügels (1) vorsteht und mit einem Profil versehen ist, um zwischen seiner Vorderkante (5) und seiner Hinterkante (6) einen Abschnitt (7) mit maximaler Breite (M) zu umfassen; und
- mit einer Verkleidung (8) zur Verringerung des örtlichen Verlusts an aerodynamischem Auftrieb versehen ist, die
• in Kontakt mit der Unterseite (4) des Flügels (1) angeordnet ist und sich in der Höhe über einen Teil des genannten Masts (3) erstreckt;
• sich mit einem vorstehenden hinteren Teil (12) mit einer Oberfläche (13) in aerodynamischer Verlängerung der Saugseite (14) des Flügels (1) zum hinteren Teil des Flügels (1) über die Hinterkante (1F) des Flügels (1) erstreckt,
**dadurch gekennzeichnet,**
- **dass** der genannte Abschnitt mit maximaler Breite (7) des genannten Masts (3) vorn am genannten konkaven und zurückgesetzten hinteren Teil (4R) der Unterseite (4) des Flügels (1) angeordnet werden kann; und
- **dass** die Verkleidung zur Verringerung des örtlichen Verlusts an aerodynamischem Auftrieb (8)
• sich zumindest mit dem größeren Teil ihrer Höhe in der Höhlung des hinteren Teils (4R) der Unterseite (4) des Flügels (1) befinden kann,
• sich zum hinteren Teil des Flügels (1) hin erstreckt und sich dabei seitlich ab dem Aufhängungsmast (3), an dem ihre Breite bis zur Hinterkante (1F) des Flügels (1), wo die Verkleidung eine Breite (La) hat, die mindestens doppelt so groß ist wie die genannte maximale Breite (M), mindestens annähernd gleich der maximalen Breite (M) des Masts ist, fächerförmig erweitert, und
• eine untere Fläche (15) umfasst, die sich in aerodynamischer Verlängerung der Saugseite (14) des Flügels (1) an die genannte obere Fläche (13) annähert, um dem hinteren vorstehenden Teil (12) der Verkleidung (8) die Form eines Blatts zu geben, das nach hinten dünner wird und in einer aerodynamischen Hinterkante (16) endet, die in Bezug auf die Hinterkante (1F) des Flügels vorsteht und sich entlang dieser Kante über eine Länge erstreckt, die der Breite (La) der Verkleidung (8) an der Hinterkante (1F) des Flügels entspricht.

2. Aufhängungsmast nach Anspruch 1,
**dadurch gekennzeichnet, dass** die Hinterkante (16) des vorstehenden hinteren Teils (12) einen Zwischenteil (161) und zwei Seitenteile (16L1, 16L2) umfasst, wobei der Zwischenteil in aerodynamischer Verlängerung des Abschnitts mit maximaler Breite (7) des Masts (3) liegt und noch weiter in Bezug auf die Hinterkante (1 F) des Flügels vorsteht als die Seitenteile (16L1, 16L2).

3. Aufhängungsmast nach Anspruch 2,
**dadurch gekennzeichnet, dass** die Seitenteile (16L1, 16L2) der Hinterkante (16) des vorstehenden hinteren Teils (12) an ihrem dem Zwischenteil (16I) gegenüber liegenden Ende allmählich auf die Hinterkante (1 F) des Flügels zulaufen.

4. Aufhängungsmast nach Anspruch 2 oder 3,
**dadurch gekennzeichnet, dass** der Zwischenteil (16I) der Hinterkante (16) des vorstehenden hinteren Teils (12) abgerundet und konvex ist.

5. Aufhängungsmast nach einem der Ansprüche 2 bis 4,
**dadurch gekennzeichnet, dass** die Seitenteile der Hinterkante (16) des vorstehenden hinteren Teils (12) am Anschluss des genannten Zwischenteils (161) einen konkaven Abschnitt (17, 18) besitzen.

6. Aufhängungsmast nach einem der Ansprüche 2 bis 5,
**dadurch gekennzeichnet, dass**
- die Unterseite (15) der Verkleidung (8) eine Zwischenrippe (19) und zwei Seitenflanken (20, 21) besitzt;
- die Zwischenrippe (19) in aerodynamischer Verlängerung des Abschnitts mit maximaler Breite (7) des genannten Masts (3) liegt; hinten im genannten Zwischenteil der Hinterkante (16I) endet und in Bezug auf den hinteren Teil (4R) der Saugseite (4) des Flügels erhabener ist als die Seitenflanken (20, 21) ; und
- die Seitenflanken (20, 21) die Zwischenrippe (19) allmählich mit dem hinteren Teil (4R) der Saugseite (4) des Flügels verbinden und dabei seitlich den genannten Fächer bilden und hinten in den Seitenteilen der Hinterkante (16L1, 16L2) des hinteren vorstehenden Teils (12) enden.

7. Aufhängungsmast nach einem der Ansprüche 1 bis 6,
**dadurch gekennzeichnet, dass** die Verkleidung (8) symmetrisch zur Längsachse (L-L) des Fußes (3S) des Masts (3) ist.

8. Aufhängungsmast nach einem der Ansprüche 1 bis 6,
**dadurch gekennzeichnet, dass** die Verkleidung (8) asymmetrisch zur Längsachse (L-L) des Fußes (3S) des Masts (3) ist.

## Claims

1. Aircraft wing structure suspension pylon (3), the said wing structure (1) comprising a pressure face (4), the rear part (4R) of which is concave and set back with respect to its front part (4A) and the said pylon (3):
- is intended to be suspended from the said wing structure (1), projecting with respect to the said pressure face (4) of the wing structure (1) and being profiled to comprise, between its leading edge (5) and its trailing edge (6), a section (7) of maximum width (M); and
- being equipped with a fairing (8) for reducing the local loss of aerodynamic lift, which:
• is placed in contact with the pressure face (4) of the said wing structure (1) and extends heightwise over part of the said pylon (3); and
• extends towards the rear of the wing structure (1), and continues beyond the trailing edge (1F) thereof, in the form of a projecting rear part (12) with an upper surface (13) in aerodynamic continuation of the suction face (14) of the said wing structure (1),
**characterized:**
- **in that** the said maximum-width section (7) of the said pylon (3) is capable of being arranged at the front of the said concave and set-back rear part (4R) of the pressure face (4) of the wing structure (1); and
- **in that** the said fairing (8) for reducing the local loss in aerodynamic lift:
• is capable of being housed, at least over most of its height, in the concavity of the said rear part (4R) of the pressure face (4) of the wing structure (1),
• extends towards the rear of the wing structure (1), widening laterally in the manner of a fantail, from the said suspension pylon (3), where it has a width at least approximately equal to the said maximum width (M) thereof, as far as the trailing edge (1F) of the wing structure (1), where it has a width (La) at least equal to twice the said maximum width (M), and
• comprises an underside (15) which comes close to the said upper surface (13), in aerodynamic continuation of the suction face (14) of the wing structure (1) so as to give the said projecting rear part (12) of the said fairing (8) the shape of a blade which tapers towards the rear and ends in an aerodynamic trailing edge (16), which projects from the trailing edge (1F) of the wing structure and extends along the latter over a length corresponding to the said width (La) of the said fairing (8) at the said trailing edge (1F) of the wing structure.

2. Suspension pylon according to Claim 1,
**characterized in that** the trailing edge (16) of the projecting rear part (12) has an intermediate part (16I) and two lateral parts (16L1, 16L2), the said intermediate part being in the aerodynamic continuation of the said maximum-width section (7) of the said pylon (3) and projecting further, with respect to the trailing edge (1F) of the wing structure, than the said lateral parts (16L1, 16L2).

3. Suspension pylon according to Claim 2,
**characterized in that**, at their opposite end to the said intermediate part (16I), the said lateral parts (16L1, 16L2) of the trailing edge (16) of the projecting rear part (12) gradually meet the trailing edge (1F) of the wing structure.

4. Suspension pylon according to either of Claims 2 and 3,
**characterized in that** the said intermediate part (16I) of the trailing edge (16) of the projecting rear part (12) is rounded and convex.

5. Suspension pylon according to one of Claims 2 to 4,
**characterized in that** the said lateral parts of the trailing edge (16) of the projecting rear part (12) comprise a concave portion (17, 18) where they meet the said intermediate part (16I).

6. Suspension pylon according to one of Claims 2 to 5,
**characterized in that**:
- the said underside (15) of the said fairing (8) has an intermediate rib (19) and two lateral flanks (20, 21);
- the said intermediate rib (19) is in the aerodynamic continuation of the said maximum-width section (7) of the said pylon (3), ends at the rear in the form of the said intermediate trailing edge part (16I) and is more in relief, with respect to the said rear part (4R) of the pressure face (4) of the wing structure, than the said lateral flanks (20, 21); and
- the said lateral flanks (20, 21) gradually connect the said intermediate rib (19) to the said rear part (4R) of the said pressure face (4) of the wing structure while at the same time laterally forming the said fantail and ending at the rear in the form of the said lateral trailing edge parts (16L1, 16L2) of the said projecting rear part (12).

7. Suspension pylon according to one of Claims 1 to 6,
**characterized in that** the said fairing (8) is symmetric with respect to the longitudinal axis (L-L) of the foot (3S) of the said pylon (3).

8. Suspension pylon according to one of Claims 1 to 6,
**characterized in that** the said fairing (8) is asymmetric with respect to the longitudinal axis (L-L) of the foot (3S) of the said pylon (3).
